Europäisches Patentamt

European Patent Office

Office européen des brevets

(11) Publication number: **0 042 679**
**A2**

# EUROPEAN PATENT APPLICATION

(21) Application number: **81302438.7**

(22) Date of filing: **02.06.81**

(51) Int. Cl.³: **G 02 C 7/04**

(30) Priority: **02.06.80 US 155305**

(43) Date of publication of application:
**30.12.81 Bulletin 81/52**

(84) Designated Contracting States:
**CH DE FR GB IT LI NL SE**

(71) Applicant: **CORNING GLASS WORKS**
**Houghton Park**
**Corning New York 14830(US)**

(72) Inventor: **Backer, George Thomas**
**4761 Ridge Road**
**Horseheads New York(US)**

(72) Inventor: **Meissner, Helmuth Ernst**
**3928 Seneca Trace**
**Painted Post New York(US)**

(72) Inventor: **Vance, Miles Elliot**
**71 East Third Street**
**Corning New York(US)**

(74) Representative: **Fentiman, Denis Richard et al,**
**Elkington and Fife High Holborn House 52/54 High**
**Holborn**
**London WC1V 6SH(GB)**

(54) **Composite contact lens.**

(57) A composite contact lens (20) having a soft plastics portion (22) which contacts the wearer's eye and a central cavity (21) within which a glass optical portion (23) is peripherally supported substantially out of contact with the eye, the glass portion (23) being readily separable from the soft plastics portion (22).

*Fig. 2*

EP 0 042 679 A2

Title:  Composite Contact Lens

The present invention relates to an improved product of the type familiarly known in the ophthalmic trade as a contact lens.  The name derives from the fact that the lens is worn in close contact with the cornea of the eye, rather than spaced a substantial distance away as in the case of spectacle lenses.

Glass was the material originally used to produce contact lenses, whether of the corneal or scleral type.  The glass lens was optically satisfactory, but proved to be generally impractical for other reasons.  The technology of the time was such that it was very difficult to design and prepare a lens to fit an individual eye properly.  Further, the glass lens tended to be heavy, thus aggravating the discomfort of an improper fit.  Finally, the glass lens fit snugly over the eye, and was not gas permeable.  Hence, a lack of oxygen accessibility to the cornea existed.  -

Subsequently, plastics material came into use.  Initially, these were the so-called hard plastics, for example, methyl methacrylate.  However, these hard materials were still subject to many of the problems encountered with glass.  In addition, scratch resistance and cleaning became problems. Hence, many patients were no more able to accommodate the hard plastics lens than the glass lens.

Around 1960, the present soft plastics (hydrogel) type lens became available.  One such material is 2-hydroxyethyl methacrylate (HEMA).  The soft plastics lens has the great advantage of flexible conformability. Also, at least some plastics materials are relatively permeable, thus allowing oxygen access to the cornea. Hence, the soft plastics lens has received widespread attention, primarily because of its promise of patient comfort.

The soft plastics lens is not without its own unique problems, however. It is quite fragile and, hence, difficult to handle without damage. Typically, it has an average life of two years. When initially placed in service, comfort and acuity may be acceptable. However, with passage of time, a coating begins to form on the plastics material. As a result, vision decreases, eyes redden and the risk of infection rises. The neccessity for frequent cleaning and sterilization, and the various chemical cleaning solutions required, are well known. From an optical standpoint, the soft plastics lens does not provide satisfactory correction because it conforms to corneal curvature. Also, it tends to increase myopia rather than stabilize it.

Very recently, composite contact lenses have been proposed. These may be composed of two plastics materials chemically bonded or united to provide a central optical element composed of one material and a surrounding skirt of another material. Such a construction is shown, for example, in United States Patent No. US-A-4,171,878 granted October 23, 1979 to A. A. Kivaev et al.

In an alternative design, the skirt portion is hydrated after forming the composite. This is shown in United States Patent No. US-A-3,121,885, granted October 24, 1978 to C. E. Erickson et al.

A variation of the hydration procedure is disclosed in United States Patent No. US-A-3,488,111 granted January 6, 1970 to A. A. Isen. The composite corneal lens disclosed in this patent is composed of two hydrophilic hydrogel components, one having a central aperture and the other being an insert within the aperture. The two components are prepared and assembled in the anhydrous state, and then expanded by hydration to give a frictional fit. The patent discloses that a hard optical material, such as glass may be centrally embedded in the insert.

Composite lenses have also been proposed which involve essentially a laminate-type construction. However, it has been reported that adherence may be a problem in this type construction. An alternative form, in which a hard plastics lens floats within a cutout portion in a soft lens, has also been reported recently. This has been referred to as a "piggyback lens".

The history of contact lens development, and especially the early role of glass lenses, are recorded in various publications. Exemplary of these is a recent article by Louis V. Genco, O.D., in the August, 1979 issue of Optometric Monthly (pp 49-53) entitled "The History of Contact Lenses". A detailed analysis of materials in use, and lenses on the market, or under investigation, appears in an article by Neal J. Bailey, O.D., Ph.D., in the April 1979 issue of Optometric Management, (pp. 27-33) entitled "Contact Lens Update Materials". Finally, an article by Caroline & Doughman in Contact & Intraocilar Lens Medical Journal, Vol. 5, No. 1, pp. 40-44 April/June 1979, describes a hard plastic-soft plastic combination lens, referred to as the "piggyback" lens, wherein the hard lens floats in a cavity in the soft portion. Additional composite lens constructions and methods are shown in the Kivaev etal., Erickson etal. and Isen Patents mentioned earlier, and in the patent references cited in those patents.

.It has long been recognized that, from a stictly technical or optical standpoint, glass is the ideal material to use in visual correction. This, excellent control of optical properties may be exercised in a permanently stable environment. Glass, as a material, is generally compatible with the eye and is wettable. Hence, if properly fitted, and if oxygen accessibility to the cornea is provided, a glass lens could be confortable.

Selected glasses may provide excellent chemical resistance, as well as resistance to abrasion and other mechanical injury. Finally, these properties, plus an ability to withstand elevated temperatures, permit easy cleaning and sterilization. Nonetheless, technical superiority has been of little avail in the face of the long standing design and fitting problems mentioned earlier.

It would thus be highly desirable to provide a comfortable contact lens embodying a glass optical element. It has now been found that it is possible to provide a composite glass-plastic lens which combines the best features of both glass and plastic lenses, in which the glass element which is the optical portion, is not in full contact with the eye and the glass and plastics components are readily separable. .

According to the present invention, there is provided a composite contact lens comprising an element of soft plastics material having a skirt portion for contact with the eye and a central cavity within which a glass optical element is peripherally supported so as to be at least partially out of contact with the eye when the lens is worn and to be readily separable from the soft plastics element.

In one embodiment, the soft plastics skirt portion
is provided with a central opening within which
the glass optical portion is held. Alternatively,
the soft plastics skirts may extend continuously
over the eye, but with a thinned down central zone.
This provides a cavity within which the glass lens
fits and is held in position, the thin central
plastics portion serving to separate the glass from
the eye. In any event, the glass lens is physically
supported by the plastics skirt so that it may be
easily removed or separated for replacement or
cleaning. Depending on the materials of the lens,
cleaning and disinfection may be performed using
boiling water or steam.

An advantage of lenses according to the
present invention is that they may be adapted for
correcting astigmatism.

The composite contact lens of the invention
is composed essentially of a soft plastics element
for contact with the eye, and a glass optical element
which is supported at least partially out of contact
with the eye, and preferably completely spaced
therefrom, by means of the soft plastics element.

The soft plastics element may be formed
from any of the materials presently available for
this type lens. The best known is polyhydroxyethylmeth-
ylmethacrylate (HEMA). Certain silicone materials,
either alone or polymerized with a known hard
plastics material such as polymethylmethacrylate
(PMMA), are also useful.

It is a particular feature of the invention,
however, that the soft plastics material is not
limited to materials now in use. Thus, it need
not be relied on for optical characteristics, nor
does it need to be of optical clarity. Rather,
any material that is at least translucent, and
which is compatible with the eye, may be used. In
particular, polypropylene and hydrophilized fluorocarbons, e.g., polytetrafluoroethylene available under the mark Teflon FEP, are contemplated because such materials are steam sterilizable. Likewise, known silicones may be polymerized with a known hard plastics material, polymethylmethacrylate (PMMA), to render them hydrophilic. Also, such materials may be surface oxidized to provide better wetting characteristics.

In one preferred embodiment, the soft plastics element is disposable, and hence replaced after removal. This greatly alleviates the most serious deficiency in present soft plastics lenses, the extreme care necessary in cleaning and sterilization . Thus, it is contemplated that the soft plastics material may be relatively inexpensive since it need only provide eye conformability. It will be selected to provide extended wear followed by removal and replacement periodically.

The glass optical element is relied on to provide the prescribed optical characteristics. Thus, a normally water clear glass or transparent glass-ceramic, having a suitable refractive index, is contemplated. If desired, the glass may be tinted with known glass colourants. Also, the glass may contain additives to render it photochromic or to exclude portions of the spectrum other than visible, e.g., ultra-violet or infrared. It is a feature of the present invention that such special optical characteristics may now be supplied through the use of glass. Since the additives are integrally embodied in the glass, the usual concern for toxic effects and the like may be minimized by selecting a sufficiently stable base glass.

It will normally be desirable to select a glass capable of withstanding steam and/or boiling water cleaning and sterilization. Also, as indicated above, the glass will usually have excellent chemical durability, particularly against alkaline attack since the eye fluid tends to be saline in nature.

The literature is replete with disclosures of optical glasses and their chemical and physical characteristics. Hence, selection and formulation of a suitable glass are dependent on desired characteristics and well within the skill of an experienced glass formulator. However, the following guidelines provide a brief summary of available information.

Glasses known to have good resistance to water or steam attack are silicates or borosilicates containing as additives zirconia, alumina, lanthana, and the usual alkali metal oxide fluxes. Silicate glasses containing titania and/or cerium oxide may provide desired ultra-violet cut off with high refractive index and relatively low density. Transparent glass-ceramics of the beta-quartz type are well known and have the advantage of mechanical strength. Cubic crystals, e.g., yttrium aluminum garnet, may prove useful in some instances.

The optical glass element may be moulded in known manner and then finished to desired contour. This may be by grinding and polishing in conventional manner to provide a suitable correction such as spherical, cylindrical, or aspheric.

In general, however, it will prove more expeditious to redraw a glass blank to form a glass rod. The surface of the redrawn rod conforms to the desired peripheral contour for the glass optical element. As explained later, the periphery may be irregular, and for such construction redrawing is preferred. The redrawn rod may then be sliced into individual elements preparatory to grinding and polishing. If the edge of the finished element is sharp, it may be flame polished.

The use of a glass element also enables application of optical quality, single or multi-layer, oxide coatings. These may serve as anti-reflective coatings to minimize reflections from the glass surface. They may also serve to control light transmission and/or screen out harmful radiation (infra red or ultraviolet). Finally, a glass having desired optical properties, but inadequate in other respects, may have a coating applied to improve chemical durability, abrasion resistance, wetting properties, or other non-optical property.

In terms of physical form, the glass optical element in the present lens will be concavo-convex with a diameter of about 7 to 10 mm., and a thickness on the order of 0.1 mm. However, the edge may be even thinner for mounting in some constructions. The plastics supporting member will normally be about 13-15 mm. in diameter.

Embodiment of the present invention will now be described by way of example, with reference to the accompanying drawings in which:

FIGURES 1, and 2 are views in cross-section of composite lens constructions in accordance with an embodiment of the invention, FIGURE 1 being exploded for clarity and

FIGURES 3, 4 and 5 are top plan views of composite lens constructions in accordance with further embodiments of the invention.

- 9 -

The physical structure and arrangement of the composite elements of the contact lens of the present invention may take various forms. Essential features of the composite contact lens are the physical support for the glass optical portion in relatively fixed position by means of the soft plastics skirt, minimal contact between the lens and the eye, and the potential for ready separation of the glass and plastics elements. Spacing of the glass from the eye may be relatively minor, for example, a tear film, but the glass must not be fully supported by the eye as in original glass lenses.

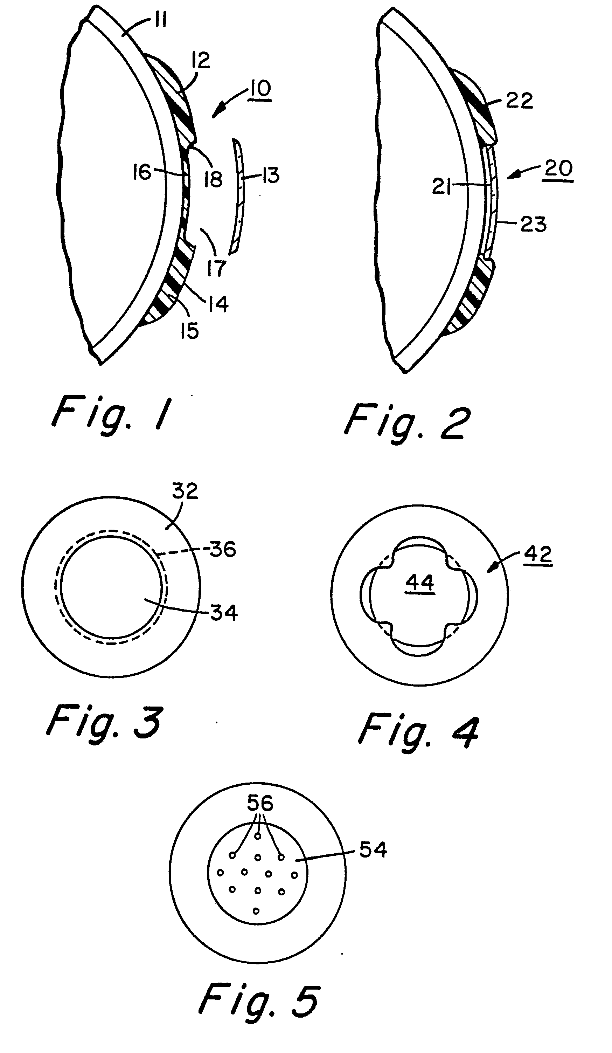

FIGURES 1, and 2 illustrate, in cross-section, different composite lens structures mounted on a wearer's eye. In each figure, the plastics element rests on and conforms to the cornea. The glass element is spaced therefrom, although incidental contact at a point or line may not be harmful.

In FIGURE 1, a composite lens 10 is mounted on a cornea 11. The lens 10 consists of a plastics element 12 and a glass element 13, shown separated from the plastics element 12 for clarity. Plastics element 12 may be in the form of a conventional soft plastics lens having a central cavity 17 located within its outer surface 14 The cavity 17 extends only partway into the plastics lens. This creates a skirt portion 15 and a thin central portion 16. Glass element 13 is firmly, but releasably, supported in fixed position within cavity 17 by the inner edge 18 of skirt 15. The central portion 16 of the plastics element 12 serves to separate or space glass element 13 from cornea 11.

The composite lens 10 may, for example, be formed from a complete soft plastics lens, slightly thicker than the glass member, by removing a central portion with a lathe. This central portion should have a depth substantially equal to that of the glass element 13 and be slightly smaller in size. The edge may be grooved or undercut so as to receive the glass element 13 and hold it firmly in place.

A composite lens 20 consisting of a plastics element 22 and a glass element 23 is shown in Figure 2. In this construction, element 22 is simply a skirt or flat annular body surrounding and supporting the glass element 23. The desired shape of the element 22 may be cast or otherwise formed. Alternatively, a full lens may be formed and a central portion removed to produce a cavity 21. Glass element 23 is mounted within the cavity 21 of the plastics element 22. The plastics element 22 holds the glass element 23 firmly in place, slightly spaced from the corneal surface upon which it may ride on a tear film. This improves oxygen supply to the eye. Also, the under or eye contacting surface of the plastics element 22 may be radially grooved to improve tear access to the central part.

The glass element 23 may be very slightly larger than the opening in the plastics element so as to fit snugly within the element 22 with a slight pressure being exerted on its peripheral edge to avoid separate movement. Alternatively, the inner edge of the annular plastics element 22 may be grooved or undercut to receive the periphery of the glass element 23. Also, the edge or periphery of the glass element 23 may have an irregular edge or profile. This effectively provides teeth to engage the plastics surface and effect mechanical support.

FIGURES 3 and 4 are top plan views of two further embodiments that is, views looking into the wearer's eye of two further embodiments of a composite contact lens according to the invention. These Figures show different means for mounting the central glass element within the annular plastics skirt.

- 11 -

FIGURE 3 shows a glass element 34 which is slightly larger than the central opening of a plastic skirt 32, the periphery of the glass element being indicated by a dotted line 36. Conveniently, the inner edge of the skirt 32 is grooved to permit opening up of the edge and/or slight bowing of the glass to snap the glass element 34 into place.

FIGURE 4 shows a lens with a skirt 42 having a fenestrated inner edge to facilitate insertion of a glass element 44. It will be appreciated that the glass element might be indented whereby it could be rotated to position.

The lens shown in FIGURE 5 is similar to that shown in FIGURE 3, except that in this case, a glass optical section 54 is provided having minute vent holes 56 to permit access for gas to the interior. These vent holes 56 may be produced by for example, a laser beam.

A composite glass-plastics contact lens has been disclosed which may take advantage of the flexible conformability, and consequent extended wear potential, of a soft plastics lens. Further, a wide material choice is available whereby one may on the one hand, select a material capable of withstanding steam sterilization, or on the other hand a relatively inexpensive, and hence disposable, material. Further the use of a glass optical portion makes available all the technical advantages of a glass lens in a composite having the personal comfort and wearability of a soft plastics material.

CLAIMS

1. A composite contact lens comprising an element of soft plastics material having a skirt portion for contact with the eye and a central cavity within which a glass optical element is peripherally supported so as to be at least partially out of contact with the eye when the lens is worn and to be readily separable from the soft plastics element.

2. A lens in accordance with claim 1 wherein the glass optical element is supported in an undercut groove in the soft plastics element.

3. A lens in accordance with claim 1 or 2 wherein the glass optical element is held in place in the central cavity by projections extending from the skirt portion over the surface of the glass optical element.

4. A lens in accordance with any one of claims 1 to 3 wherein the entire glass optical element is supported so as to be spaced from the eye when the lens is worn.

5. A lens in accordance with any preceding claim wherein the soft plastics element comprises the skirt portion and a central portion the central portion being thinner than the skirt portion to provide the cavity to receive the glass optical element.

6. A lens in accordance with claim 1 wherein the glass optical element is cut from a redrawn rod.

7. A lens in accordance with claim 1 in which the glass optical element is manufactured from a photochromic glass.

8. A lens in accordance with claim 1 in which the glass optical element is manufactured from a glass tinted with a glass colourant.

9. A lens in accordance with claim 1 wherein

- 13 -

the glass optical element has a coating deposited on
that face thereof which is remote from the eye when the
lens is worn.

0042679

1 / 1

Fig. 1

Fig. 2

Fig. 3

Fig. 4

Fig. 5